# EUROPÄISCHE PATENTSCHRIFT

(11) **EP 0 730 993 B1**
(45) Veröffentlichungstag und Bekanntmachung des Hinweises auf die Patenterteilung: **09.06.1999**
(21) Anmeldenummer: 96103621.7
(22) Anmeldetag: 08.03.1996
(51) Int. Cl.: B60N 2/48

(54) **Kopfstütze für Kraftfahrzeugsitze**
Head rest for automotive vehicle seats
Appui-tête pour sièges de véhicules automobiles

(30) Priorität: 10.03.1995 DE 19508198; 08.03.1996 DE 19608825
(43) Veröffentlichungstag der Anmeldung: 11.09.1996
(73) Patentinhaber: GRAMMER Automotive GmbH, 92224 Amberg (DE)
(72) Erfinder: Pausch, Friedhelm, 42697 Solingen (DE); Wege, Lutz, 42657 Solingen (DE); Buchmann, Ralf, Dipl.-Ing., 40595 Düsseldorf (DE)
(74) Vertreter: Patentanwälte Ostriga & Sonnet

(56) Entgegenhaltungen:
- EP-A- 0 267 503
- DE-A- 2 120 807
- DE-A- 2 430 572
- DE-A- 3 040 846
- DE-A- 3 513 227
- DE-A- 3 730 210
- DE-A- 3 911 763
- FR-A- 2 305 150
- US-A- 3 542 428

## Beschreibung

Die Erfindung betrifft eine Kopfstütze entsprechend dem jeweiligen Oberbegriff des Anspruchs 1 sowie des nebengeordneten Anspruchs 2.

Kopfstützen der hier interessierenden Art sind beispielsweise durch die DE-G-30 40 846 oder durch die DE-G-21 20 807 bekanntgeworden.

Gemäß der DE-G-30 40 846 sind beide Tragstangen unverschieblich in der Sitzlehne gehalten, während der Kopfkasten auf den oberen freien Endbereichen der Tragstangen relativ zu diesen höhenverschieblich und arretierbar geführt ist. Eine Kopfstütze gemäß der DE-G-30 40 846 stellt eine innen höhenverstellbare Kopfstütze dar.

Im Falle der DE-G-21 20 807 ist der Kopfpolsterträger bzw. der Kopfkasten um eine horizontale Neigeachse relativ zu den beiden Tragstangen neigbar. Die Höhenverstellung erfolgt dadurch, daß die Tragstangen innerhalb der Sitzlehne relativ zu letzterer höhenverschieblich und arretierbar geführt sind. Bei der Kopfstütze gemäß der DE-G-21 20 807 handelt es sich demnach um eine sitzlehnenseitig höhenverstellbare Kopfstütze.

Die vorliegende Erfindung befaßt sich mit der Höhenverstellung von sowohl innen als auch sitzlehnenseitig höhenverstellbaren Kopfstützen.

Sowohl bei innen als auch bei sitzlehnenseitig höhenverstellbaren Kopfstützen wird es als nachteilig empfunden, daß bei regelmäßiger bzw. idealer Neigung der Sitzlehne nur ein Fahrgast großer Körpergröße einen hinreichend geringen Kopfabstand zur Anlehn- bzw. Stützfläche des Kopfpolsters einer Kopfstütze aufweist. Bei Fahrgästen mittlerer Körpergröße und geringer Körpergröße vergrößert sich dieser Abstand zunehmend, was bei Unfällen schädliche Beschleunigungen des menschlichen Kopfes zur Folge haben kann.

Die regelmäßige bzw. ideale Neigung einer Sitzlehne beträgt etwa 25° zur Vertikalen. Diese ergonomisch bedingte Sitzlehnenneigung gestattet dem Fahrgast ein relativ ermüdungsarmes Fahren und zugleich eine Position, aus welcher die Bedienelemente des Kraftwagens relativ gut erreichbar sind.

Durch die DE-A-3 911 763 ist eine nicht zur erfindungsgemäßen Gattung zählende Schulterstütze für die Rückenlehne eines Fahrzeugsitzes bekannt. Das sich zwischen den Rückenlehnenseitenholmen erstreckende traversenartige Tragglied der Schulterstütze ist mittels eines gekrümmte Steuerschlitze beeinhaltenden Lenkergetriebes mit dem oberen Ende je eines Schubhalters verbunden, der jeweils ein manuell oder motorisch antreibbares Ritzel trägt. Das Ritzel kämmt jeweils mit einer vertikalen Zahnstange einer in der Rückenlehne festen Haltelamelle, so daß die paarig angeordneten Schubhalter, die wiederum das die Lenkergetriebe mit dem traversenartigen Tragglied tragen, vertikal verstellt werden können.

Ein zum jeweiligen Lenkergetriebe zählender Stellschieber bildet in seinem unteren Bereich einen Zahnstangenabschnitt, der mittels eines im Schubhalter gelagerten manuell oder motorisch antreibbaren Ritzels vertikal verstellbar ist. In Verbindung mit den erwähnten Steuerschlitzen bewirkt eine Vertikalverstellung des Stellschiebers eine Bewegung des traversenartigen Traggliedes nach vorn oder nach hinten. Gemäß der DE-A-3 911 763 erfolgen die Vertikalverstellung und die Horizontalverstellung des tranversenartigen Traggliedes willkürlich und unabhängig voneinander.

Ausgehend von den vorbezeichneten bekannten Kopfstützen, liegt der Erfindung die Aufgabe zugrunde, eine Kopfstütze mit Mitteln auszurüsten, welche in jeder Höheneinstellung und nach Möglichkeit weitestgehend zwangsläufig einen optimalen, möglichst geringen Abstand zwischen Kopfpolster-Stütz- bzw. Anlehnfläche und Fahrgast-Kopf gewährleisten.

Entsprechend dem Kennzeichenteil des Anspruchs 1 wird diese Aufgabe dadurch gelöst, daß bei einer innen höhenverstellbaren Kopfstütze, die einen relativ zur Tragstange höhenverstellbaren Kopfkasten aufweist, ein den Kopfkasten verschieblich tragender tragstangenseitiger Verstellbereich sich entgegen der Anlehnrichtung konvex gewölbt nach vorn erstreckt, derart, daß der Kopfkasten bei seiner Abwärtsverstellung eine der Anlehnrichtung entgegengesetzte Vorwärtsbewegung ausführt.

Entsprechend dem Kennzeichenteil des dem Anspruch 1 nebengeordneten Anspruchs 2 ist die vorgenannte Aufgabe erfindungsgemäß dadurch gelöst worden, daß bei einer sitzlehnenseitig höhenverstellbaren Kopfstütze, die eine relativ zur Sitzlehne höhenverstellbare, den neigbaren Kopfkasten tragende Tragstange aufweist, ein in der Sitzlehne verschieblicher tragstangenseitiger Verstellbereich sich entgegen der Anlehnrichtung konvex gewölbt nach vorn erstreckt, derart, daß der Kopfkasten bei seiner Abwärtsbewegung eine der Anlehnrichtung entgegengesetzte Vorwärtsbewegung ausführt.

Sowohl bei der innen höhenverstellbaren Kopfstütze entsprechend dem Anspruch 1 als auch bei der sitzlehnenseitig höhenverstellbaren Kopfstütze gemäß dem Anspruch 2 bewirkt der jeweilige tragstangenseitige Verstellbereich, welcher sich entgegen der Anlehnrichtung konvex gewölbt nach vorn erstreckt, daß der Kopfkasten im Ausgleich zur Neigung der Sitzlehne relativ zu letzterer eine solche Vorwärtsbewegung ausführt, daß der Kopf des Fahrgastes unabhängig von dessen Körpergröße stets die Stütz- bzw. Anlehnfläche des Kopfpolsters berührt. Umgekehrt führt der Kopfkasten entsprechend der Erfindung bei seiner Aufwärtsbewegung eine der Anlehnrichtung gleichgerichtete Rückwärtsbewegung aus.

Mit der Höhenverstellung der erfindungsgemäßen Kopfstütze vollführt der Kopfkasten zugleich eine Neigebewegung. Um die Stütz- bzw. Anlehnfläche des Kopfpolsters unabhängig von der Körpergröße des Fahrgastes stets in einer optimalen Neigungslage halten zu können, ist es zweckmäßig, die Neigung des Kopfkastens nach jeder Höhenveränderung nachzustellen. Die jeweilige ergonomisch ideale Neigeverstellung des Kopfkastens sollte gemäß weiteren Erfindungsmerkmalen kraft- und/oder formschlüssig arretierbar sein.

Entsprechend einer besonders wichtigen Erfindungsvariante sollte eine einmal - insbesondere konstruktiv - vorbestimmte ergonomisch günstige Neigung der Stütz- bzw. Anlehnfläche des Kopfpolsters unabhängig von der Höhenverstellung und von willkürlichen Eingriffen des Fahrgastes beibehalten werden, was gemäß Anspruch 3 dadurch geschieht, daß dem tragstangenseitigen Verstellbereich eine Kulissensteuerung zugeordnet ist, welche die mit der Höhenverstellung einhergehende Neigungsänderung des Kopfkastens kompensiert.

Im vorgenannten Zusammenhang sieht die Erfindung gemäß Anspruch 4 vor, daß bei einer innen höhenverstellbaren Kopfstütze der Kopfkasten um eine in dessen unterem Bereich angeordnete Neigeachse neigbar an je einem auf dem tragstangenseitigen Verstellbereich befindlichen Gleitschuh gehalten ist und mindestens eine sich entgegengesetzt zum tragstangenseitigen Verstellbereich spiegelsymmetrisch zu diesem erstreckende, in Anlehnrichtung konvex gewölbte Kulisse aufweist, in welche ein im Abstand oberhalb der Neigeachse angeordneter, an der Tragstange fester Kulissenstein eingreift.

Bei einer innen höhenverstellbaren Kopfstütze sieht die Erfindung gemäß Anspruch 5 im Hinblick auf die Kulissen vor, daß zwei Wangen, insbesondere beide Seitenwangen, des Kopfkastens je eine Kulisse aufweisen, in welche ein zwei Tragstangen miteinander verbindendes, zur Neigeachse paralelles, stabartiges Bauteil jeweils nach Art eines Kulissensteins eingreift.

Im Hinblick auf eine sitzlehnenseitig höhenverstellbare Kopfstütze sieht die Erfindung gemäß Anspruch 6 zur Kompensation der mit der Höhenverstellung einhergehenden Neigungsänderung vor, daß im oberen Bereich je einer die Tragstange haltenden sitzlehnenseitigen Führungshülse ein Gleitschuh um eine Neigeachse schwenkbar gehalten und vom tragstangenseitigen Verstellbereich durchsetzt ist, daß der Sitzhülse eine mit dieser raumfeste, sich entgegengesetzt zum tragstangenseitigen Verstellbereich spiegelsymmetrisch zu diesem erstreckende, in Anlehnrichtung konvex gewölbte Kulisse zugeordnet ist, in welche ein im Abstand unterhalb der Neigeachse befindlicher, an der Tragestange fester Kulissenstein eingreift.

Gemäß Anspruch 7 sieht die Erfindung in einer Variante vor, daß der Kulissenstein von einem unten am tragstangenseitigen Verstellbereich befestigten, quer von der Tragstange wegragenden Vorsprung gebildet ist.

Eine andere erfindungsgemäße Ausführungsform besteht gemäß Anspruch 8 darin, daß ein zwei Tragstangen miteinander verbindendes, zur Neigeachse paralleles, stabartiges Bauteil den jeweils in eine Kulisse eingreifenden Kulissenstein bildet.

Anhand beigefügter Zeichnungen sind Vorteile von erfindungsgemäßen Ausführungsbeispielen zum Teil im Vergleich zum Stand der Technik näher dargestellt, es zeigt,
Fig. A-C eine herkömmliche innen höhenverstellbare Kopfstütze für Kraftfahrzeugsitze (z.B. gemäß der DE-G-30 40 846) in Anpassung an die jeweilige Körpergröße des Fahrgastes in unterschiedlichen Höhenstellungen;
Fig. 1A bis 1C in Gegenüberstellung zu den Fig. A-C in analoger Konfiguration die Höhenverstellung bei einer erfindungsgemäßen Kopfstütze;

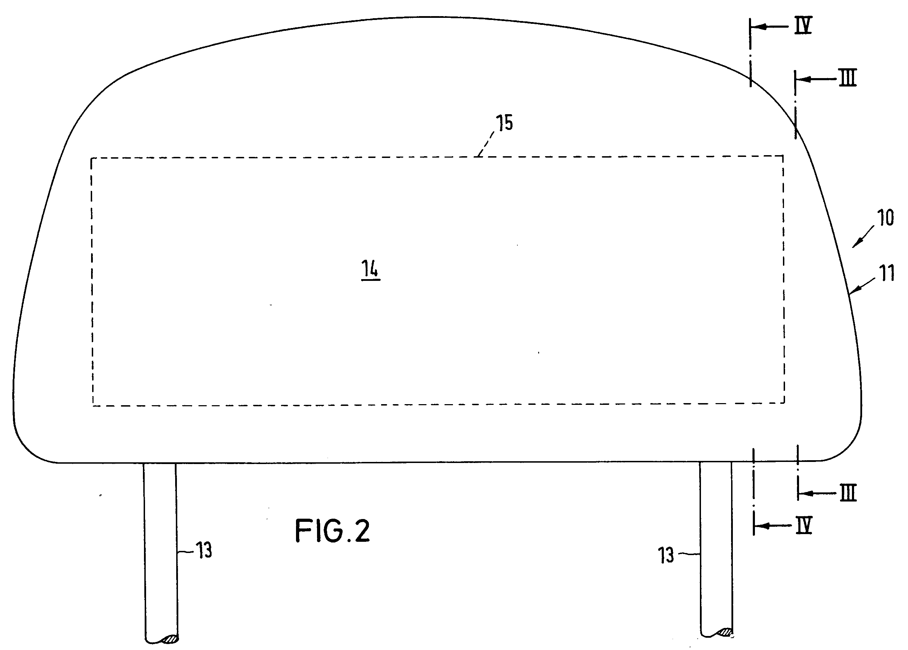

Fig. 2 eine schematische Frontalansicht einer innen verstellbaren erfindungsgemäßen Kopfstütze;
Fig. 3 einen schematischen Vertikalschnitt etwa entlang der Schnittlinie III-III in Fig. 2;
Fig. 4 einen schematischen Vertikalschnitt etwa entlang der Schnittlinie IV-IV in Fig. 2 und
Fig. 5 in Anlehnung an die Darstellungsweise der Fig. 3 und 4 einen Vertikalschnitt durch eine erfindungsgemäße sitzlehnenseitig höhenverstellbare Kopfstütze.

In den Fig. A-C ist eine herkömmliche innenverstellbare Kopfstütze für Kraftfahrzeugsitze (z.B. gemäß der DE-G-(30 40 846) in Anpassung an die jeweilige Körpergröße des Fahrgastes in unterschiedlichen Höhenstellungen gezeigt.

Die Kopfstütze 10 besitzt ein Kopfpolster 11, welches einen nicht gezeigten Kopfkasten umhüllt, der auf den in der Sitzlehne 12 unverschieblich fest gehaltenen Tragstangen 13 höhenverschieblich und arretierbar angeordnet ist. Die Fig. A und B stellen das Kopfpolster 11 in derselben Höheneinstellung dar. In Fig. A ist ein Fahrgast großer Körpergröße, in Fig. B ein Fahrgast mittlerer Körpergröße und in Fig. C ein Fahrgast geringer Körpergröße teilweise gezeigt.

Die Neigung der Sitzlehne 12 entspricht dem Idealfall, weicht also etwa um 25° von der Vertikalen ab. Die Fig. A-C zeigen, daß, bedingt durch die Körperform eines normalwüchsigen Menschen, nur der Fahrgast großer Körpergröße über einen hinreichend geringen Kopfabstand S zur Stütz- bzw. Anlehnfläche 14 des Kopfpolsters 11 verfügt, der sich indessen im Hinblick auf die Fig. B und C zunehmend vergrößert.

Große Abstände S sind aber nachteilig, weil sie bei Unfällen schädliche Beschleunigungen des menschlichen Kopfes zur Folge haben können.

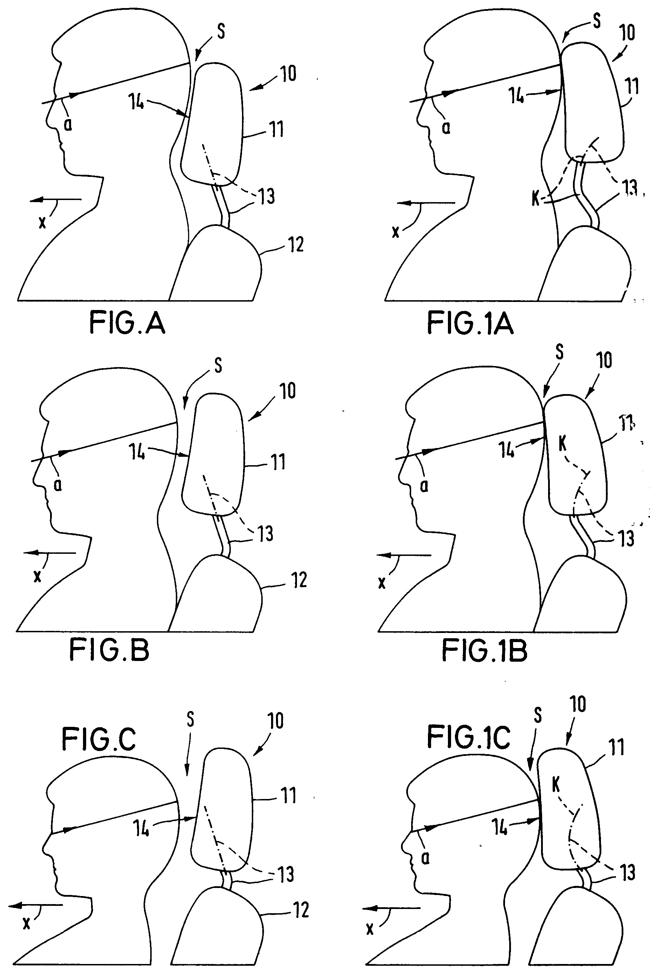

In Gegenüberstellung zu den Fig. A-C zeigen die Fig. 1A, 1B und 1C in analoger Konfiguration eine erfindungsgemäße Kopfstütze 10.

Die Fig. 1A-1C zeigen, daß der Abstand S des Fahrgast-Kopfes zur Stütz- bzw. Anlehnfläche 14 des Kopfpolsters 11 in allen Fällen gleich Null ist. Das liegt im wesentlichen daran, daß der Verstellbereich der Tragstangen 13 der erfindungsgemäßen Kopfstützen jeweils einen in Fahrtrichtung x bzw. entgegen der Anlehnrichtung a konvexen Bogen K bildet, welcher das Kopfpolster 10 auf seinem Verstellweg von oben (Fig. 1A) nach unten (Fig. 1C) in Richtung x nach vorn versetzt. Im Unterschied hierzu weisen die Tragstangen 13 der bekannten Kopfstütze 10 gemäß den Fig. A-C eine in Fahrtrichtung x schräg nach oben verlaufende gerade Erstreckung auf.

Für eine weitere vorteilhafte Funktion der erfindungsgemäßen Kopfstütze gemäß den Fig. 1A-1C ist zudem zumindest fakultativ eine besondere Kulissensteuerung wichtig, die nachstehend näher beschrieben ist.

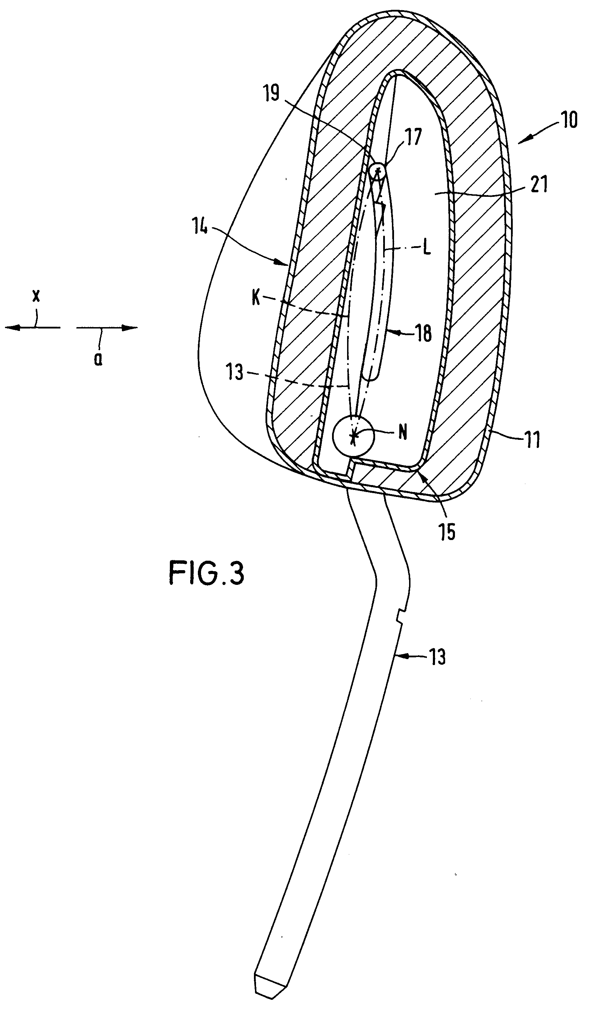

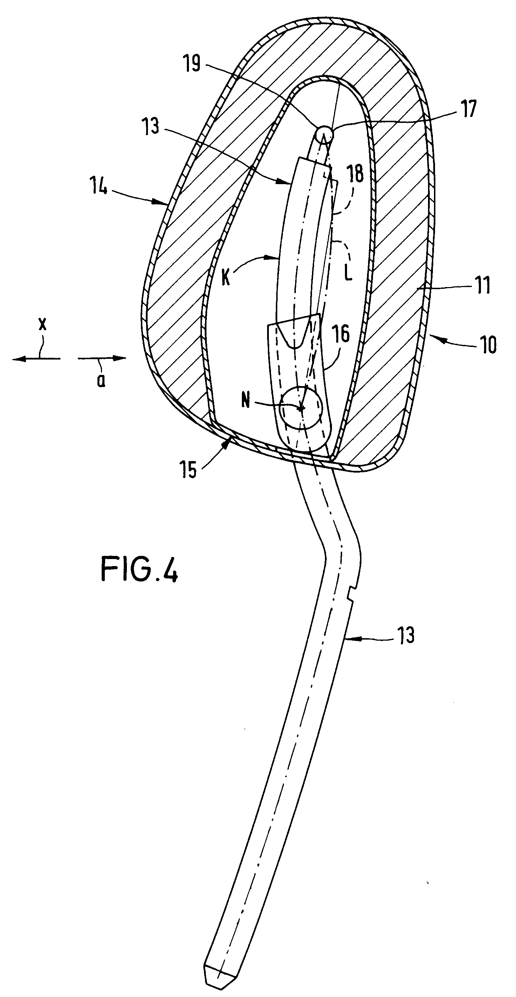

Gemäß den Fig. 3 und 4 ist der Kopfpolsterträger bzw. Kopfkasten 15 um eine Neigeachse N je eines auf dem konvex bogenförmigen Verstellbereich K der Tragstange 13 verschieblichen und arretierbaren Gleitschuhs 16 neigbar gelagert, von dem in Fig. 3 nur die Neigeachse N gezeigt ist. In Fig. 3 ist der Verlauf des Bogens K der Tragestange 13 strichpunktiert dargestellt. Am oberen freien Ende einer jeden Tragstange 13 ist ein raumfester Kulissenstein 17 vorhanden, welcher in einer ebenfalls vom Kopfkasten 15, und zwar in dessen Seitenwange 21, gebildeten beweglichen schlitzartigen Kulissenführung 18 relativverschieblich ist. Der Kulissenstein 17 kann beispielsweise aus einer zwei Tragstangen 13 jochartig miteinander verbindenden Querstange 19 bestehen.

In den Fig. 3 und 4 ist das Kopfpolster 11 einschließlich des von ihm umhüllten Kopfkastens 15 in der untersten Höhenposition gezeigt. Der Verlauf der Längsachse L der schlitzartigen Kulissenführung 18 stellt sich als spiegelsymmetrischer Verlauf des konvexen Bogens K der Tragstange 13 dar. Hierbei kann man sich vorstellen, daß die Spiegelebene zwischen dem Kulissenstein 17 und der Neigeachse N angeordnet ist.

Die Funktion der Kopfstütze 10 gemäß den Fig. 3 und 4 ist folgende: Wenn der umpolsterte Kopfkasten 15 nach oben verschoben werden soll, bewegt sich der Gleitschuh 16 gemeinsam mit der Neigeachse N auf dem konvexen Bogen K der Tragstange 13 nach oben und zugleich rückwärts in Anlehnrichtung a. Zugleich bewegt sich die schlitzartige Kulissenführung 18 entlang dem Kulissenstein 17 und bewirkt eine Neigung des Kopfkastens 15 in Fahrtrichtung x bzw. entgegen der Anlehnrichtung a nach vorn. Mithin wird eine Bewegung des Kopfkastens 15 nach vorn erzeugt, welche eine mit der Querbewegung der Neigeachse N in Richtung a auf dem Bogen K einhergehende Neigung kompensiert.

An dem gezeigten Ausführungsbeispiel wird deutlich, daß durch einen bestimmten Verlauf von Bogen K und Kulissenführung 18 die Bewegung des Kopfkastens 15 bei der Höhenverstellung so zwangsgesteuert werden kann, daß unabhängig von der Größe des Fahrgastes der Abstand S zwischen dem Fahrgast-Kopf und der Stütz- bzw. Anlehnfläche 14 möglichst gering und konstant und die Anlehnfläche 14 zudem ständig in einer vorbestimmten Neigung gehalten sind.

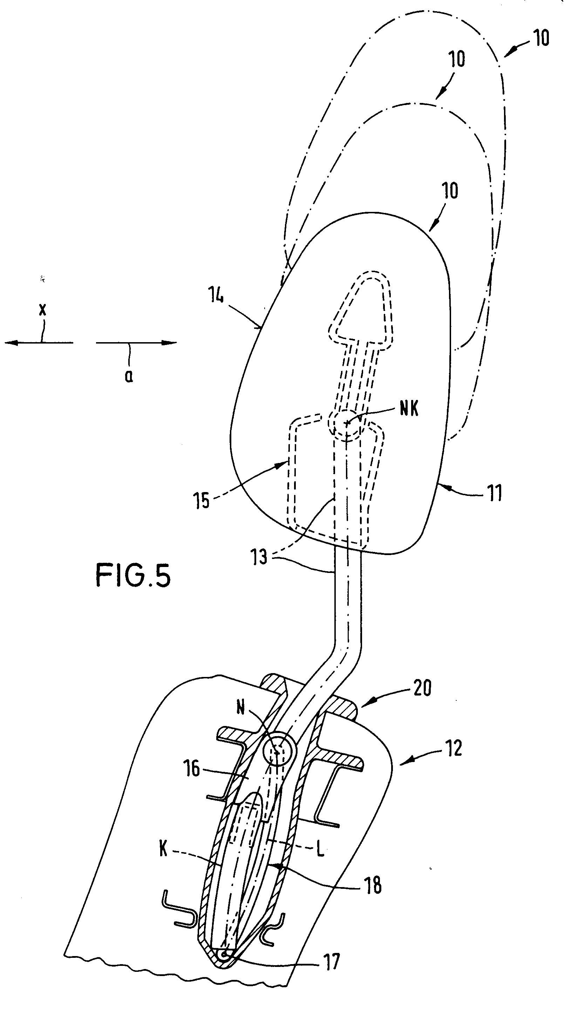

Gemäß Fig. 5 sind in der Sitzlehne 12 zwei Führungshülsen 20 verankert, von denen nur eine gezeigt ist. Die Tragstange 13 ist innerhalb der Führungshülse 20 höhenverschieblich angeordnet. Hierzu ist ein Gleitschuh 16 vorgesehen, welcher um eine bezüglich der Führungshülse 20 raumfeste Neigeachse N schwenkbar ist. Die Tragstange 13 ist durch den Gleitschuh 16 hindurchgeführt. Unterseitig am freien Ende der Tragstange 13 weist diese einen Kulissenstein 17 auf. Der Kulissenstein 17 ist in einer mit der Sitzlehne 12 bzw. mit der Führungshülse 20 festen schlitzartigen Kulissenführung 18 geführt. Die strichpunktierte Längsachse der schlitzartigen Kulissenführung 18 ist ebenfalls mit L bezeichnet. Der in Fahrtrichtung x bzw. entgegen der Anlehnrichtung a konvexe bogenförmige Verstellbereich der Tragstange 13 ist ebenfalls mit K bezeichnet.

Die Höhenverstellfunktion der sitzlehnenseitig verstellbaren Kopfstütze gemäß Fig. 5 verläuft analog zur innenverstellbaren Kopfstütze entsprechend den Fig. 3 und 4. Wenn die Tragstange 13 in ihrer gemäß Fig. 5 untersten Höhenposition nach oben verschoben werden soll, gleitet der Verstellbereich K durch den Gleitschuh 16. Die mit der Querbewegung des Kopfkastens 15 in Richtung a einhergehende Neigung der Anordnung nach hinten wird dadurch kompensiert, daß der Kulissenstein 17 die raumfeste Kulisse 18 durchfährt und dabei die Tragstange 13 nach vorn in Richtung x neigt.

Analog zu den Darstellungen der Fig. 3 und 4 verläuft auch gemäß Fig. 5 die Längsachse L der schlitzartigen Kulissenführung 18 etwa spiegelbildlich zum konvexen Bogen K der Tragstange 13.

Auch am Beispiel der Fig. 5 wird deutlich, daß man die durch den konvexen Bogen K bedingte Querbewegung des Kopfkastens 15 bei seiner Höhenverstellung (ebenso wie bei der innenverstellbaren Kopfstütze 10 gemäß den Fig. 3 und 4) durch den Verlauf der schlitzartigen Kulissenführung 18 so beeinflussen kann, daß die Neigungsänderung der Stützfläche 14 unabhängig von der Körpergröße möglichst gering und konstant bleibt.

Die sitzlehnenseitig verstellbare Kopfstütze 10 gemäß Fig. 5 kann an den oberen freien Enden der Tragstangen 13 mit einer Neigeachse NK versehen sein, auf welcher der Kopfkasten 15 neigbar gelagert ist.

Bei einer sitzlehnenseitig verstellbaren Kopfstütze 10 kann die Kulissensteuerung 17, 18 so ausgeführt werden, daß sich die Relativlage des Kopfpolsters 11 bei der Höhenverstellung praktisch entlang einer Geraden orientiert. Andererseits kann die Kulissensteuerung so ausgebildet sein, daß beispielsweise bei einer Höhenverstellung des Kopfpolsters 11 von oben nach unten das Kopfpolster durch Zwangssteuerung der Kulisse 18 zunehmend nach vorn in Richtung geneigt wird, um den ergonomisch bzw. physiologisch bedingten, größer werdenden Abstand des Kopfes von der kopfpolsterseitigen Stützfläche 14 zu verringern.

## Patentansprüche

1. Kopfstütze (10) für Kraftfahrzeugsitze mit einem an mindestens einer Tragstange (13) gehaltenen, neigbaren und relativ zu einer Sitzlehne (12) höhenverstellbaren umpolsterten Kopfkasten (15), dadurch gekennzeichnet, daß bei einer innen höhenverstellbaren Kopfstütze (10), die einen relativ zur Tragstange (13) höhenverstellbaren Kopfkasten (15) aufweist, ein den Kopfkasten (15) verschieblich tragender tragstangenseitiger Verstellbereich (K) sich entgegen der Anlehnrichtung (a) konvex gewölbt nach vorn (x) erstreckt, derart, daß der Kopfkasten (15) bei seiner Abwärtsverstellung eine der Anlehnrichtung (a) entgegengesetzte Vorwärtsbewegung (x) ausführt.

2. Kopfstütze (10) für Kraftfahrzeugsitze mit einem an mindestens einer Tragstange (13) gehaltenen, neigbaren und relativ zu einer Sitzlehne (12) höhenverstellbaren umpolsterten Kopfkasten (15), dadurch gekennzeichnet, daß bei einer sitzlehnenseitig höhenverstellbaren Kopfstütze (10), die eine relativ zur Sitzlehne (12) höhenverstellbare, den neigbaren Kopfkasten (15) tragende Tragstange (13) aufweist, ein in der Sitzlehne (12) verschieblicher tragstangenseitiger Verstellbereich (K) sich entgegen der Anlehnrichtung (a) konvex gewölbt nach vorn (x) erstreckt, derart, daß der Kopfkasten (15) bei seiner Abwärtsbewegung eine der Anlehnrichtung (a) entgegengesetzte Vorwärtsbewegung (x) ausführt.

3. Kopfstütze nach Anspruch 1 oder nach Anspruch 2, dadurch gekennzeichnet, daß dem tragstangenseitigen Verstellbereich (K) eine Kulissensteuerung (17, 18) zugeordnet ist, welche die mit der Höhenverstellung einhergehende Neigungsänderung des Kopfkastens (15) kompensiert.

4. Kopfstütze nach Anspruch 3, dadurch gekennzeichnet, daß bei einer innen höhenverstellbaren Kopfstütze (10) der Kopfkasten (15) um eine in dessen unterem Bereich angeordnete Neigeachse (N) neigbar an je einem auf dem tragstangenseitigen Verstellbereich (K) befindlichen Gleitschuh (16) gehalten ist und mindestens eine sich entgegengesetzt zum tragstangenseitigen Verstellbereich (K) spiegelsymmetrisch zu diesem erstreckende, in Anlehnrichtung (a) konvex gewölbte Kulisse (18) aufweist, in welche ein im Abstand oberhalb der Neigeachse (N) angeordneter, an der Tragstange (13) fester Kulissenstein (17) eingreift.

5. Kopfstütze nach Anspruch 4, dadurch gekennzeichnet, daß zwei Wangen, insbesondere beide Seitenwangen (21), des Kopfkastens (15) je eine Kulisse (18) aufweisen, in welche ein zwei Tragstangen (13) miteinander verbindendes, zur Neigeachse paralleles, stabartiges Bauteil (19) jeweils nach Art eines Kulissensteins (17) eingreift.

6. Kopfstütze nach Anspruch 3, dadurch gekennzeichnet, daß bei einer sitzlehnenseitig höhenverstellbaren Kopfstütze (10) im oberen Bereich je einer die Tragstange (13) haltenden sitzlehnenseitigen Führungshülse (20) ein Gleitschuh (16) um eine Neigeachse (N) schwenkbar gehalten und vom tragstangenseitigen Verstellbereich (K) durchsetzt ist, und daß der Sitzhülse (20) eine mit dieser raumfeste, sich entgegengesetzt zum tragstangenseitigen Verstellbereich (K) spiegelsymmetrisch zu diesem erstreckende, in Anlehnrichtung (a) konvex gewölbte Kulisse (18) zugeordnet ist, in welche ein im Abstand unterhalb der Neigeachse (N) befindlicher, an der Tragstange (13) fester Kulissenstein (17) eingreift.

7. Kopfstütze nach Anspruch 6, dadurch gekennzeichnet, daß der Kulissenstein (17) von einem unten am tragstangenseitigen Verstellbereich (K) befestigten, quer von der Tragstange (13) wegragenden Vorsprung gebildet ist.

8. Kopfstütze nach Anspruch 6, dadurch gekennzeichnet, daß ein zwei Tragstangen (13) miteinander verbindendes, zur Neigeachse (N) etwa paralleles, stabartiges Bauteil den jeweils in eine Kulisse (18) eingreifenden Kulissenstein (17) bildet.

## Claims

1. Headrest (10) for motor vehicle seats having an inclinable upholstered head restraint (15), which is mounted on at least one support rod (13) and height-adjustable relative to a seat back (12), characterized in that, in the case of an internally height-adjustable headrest (10) having a head restraint (15) which is height-adjustable relative to the supporting rod (13), an adjusting region (K) of the support rod carrying the head restraint (15) in a displaceable manner extends with a convex curvature in a forward direction (x) counter to the resting direction (a) in such a way that the head restraint (15) during its downward adjustment executes a forward motion (x) counter to the resting direction (a).

2. Headrest (10) for motor vehicle seats having an inclinable upholstered head restraint (15), which is mounted on at least one support rod (13) and height-adjustable relative to a seat back (12), characterized in that, in the case of a headrest (10) which is height-adjustable at the seat back end and has a support rod (13) height-adjustable relative to the seat back (12) and carrying the inclinable head restraint (15), an adjusting region (K) of the support rod, which is displaceable in the seat back (12), extends with a convex curvature in a forward direction (x) counter to the resting direction (a) in such a way that the head restraint (15) during its downward motion executes a forward motion (x) counter to the resting direction (a).

3. Headrest according to claim 1 or according to claim 2, characterized in that associated with the adjusting region (K) of the support rod is a link motion (17, 18), which compensates the variation of the inclination of the head restraint (15) which accompanies the height adjustment.

4. Headrest according to claim 3, characterized in that, in the case of an internally height-adjustable headrest (10), the head restraint (15) is mounted, so as to be inclinable about an axis of inclination (N) disposed in its bottom region, on guide shoes (16) situated in each case on the adjusting region (K) of a support rod and has at least one link (18) with a convex curvature in resting direction (a), which extends in the opposite direction and mirror-symmetrically relative to the adjusting region (K) of the support rod and into which a link block (17) engages, which is disposed at a distance above the axis of inclination (N) and fixed on the support rod (13).

5. Headrest according to claim 4, characterized in that two cheeks, in particular, both side cheeks (21) of the head restraint (15) each comprise a link (18), into which a rod-like component (19) parallel to the axis of inclination and connecting two support rods (13) to one another engages in each case in the manner of a link block (17).

6. Headrest according to claim 3, characterized in that, in the case of a headrest (10) which is height-adjustable at the seat back end, in each case in the upper region of a guide bush (20) of the seat back, which holds the support rod (13), a guide shoe (16) is held so as to be capable of swivelling about an axis of inclination (N) and is penetrated by the adjusting region (K) of the support rod, and that associated with and spatially fixed relative to the seat bush (20) is a link (18) with a convex curvature in resting direction (a), which extends in the opposite direction and mirror-symmetrically relative to the adjusting region (K) of the support rod and into which a link block (17) engages, which is situated at a distance below the axis of inclination (N) and fixed on the support rod (13).

7. Headrest according to claim 6, characterized in that the link block (17) is formed by a projection, which is fastened to the bottom of the adjusting region (K) of the support rod and projects transversely from the support rod (13).

8. Headrest according to claim 6, characterized in that a rod-like component approximately parallel to the axis of inclination (N) and connecting two support rods (13) to one another forms the link block (17), which engages in each case into a link (18).

## Revendications

1. Appuie-tête (10) pour sièges de véhicule, avec un caisson de tête (15), entouré d'un rembourrage, maintenu sur au moins une tige support (13), susceptible d'être incliné et réglable en hauteur par rapport à un dossier de siège (12), caractérisé en ce que dans le cas d'un appuie-tête (10) réglable en hauteur intérieurement, présentant un caisson de tête (15) réglable en hauteur par rapport à la tige support (13), une zone de réglage (K), située côté tige support, portant de façon mobile le caisson de tête (15), s'étend avec une courbure convexe vers l'avant (x), de manière que le caisson de tête (15), lors de son réglage d'abaissement, effectue un mouvement vers l'avant, opposé à la direction de mise en appui (a).

2. Appuie-tête (10) pour sièges de véhicule, avec un caisson de tête (15), entouré d'un rembourrage, maintenu sur au moins une tige support (13), susceptible d'être incliné et réglable en hauteur par rapport à un dossier de siège (12), caractérisé en ce que, dans le cas d'un appuie-tête (10) réglable en hauteur du côté dossier, présentant une tige support (13), réglable en hauteur par rapport au dossier de siège (12), portant le caisson de tête (15) inclinable, une zone de réglage (K), située côté tige support, mobile dans le dossier de siège (12), s'étend avec une incurvation convexe vers l'avant, à l'encontre de la direction d'appui (a), de manière que le caisson de tête (15), lors de son déplacement d'abaissement, effectue un déplacement vers l'avant (x) opposé à la direction de mise en appui (a).

3. Appuie-tête selon la revendication 1 ou selon la revendication 2, caractérisé en ce qu'est associée à la zone de réglage (K), située côté tige support, une commande à coulisse (17, 18) qui compense la modification d'inclinaison du caisson de tête (15), provoquée par le réglage en hauteur.

4. Appuie-tête selon la revendication 3, caractérisé en ce qu'en cas d'un appuie-tête (10) réglable en hauteur intérieurement, le caisson de tête (15) est susceptible d'être incliné autour d'un axe d'inclinaison (N) disposé dans sa zone inférieure, en étant maintenu chaque fois sur un patin de coulissement (16) se trouvant sur la zone de réglage (K) située côté tige support et présente au moins une coulisse (18) à courbure convexe dans la direction de mise en appui (a), s'étendant à l'opposé par rapport à la zone de réglage (K) située côté tige support, suivant une symétrie spéculaire par rapport à celle-ci, coulisse dans laquelle s'engage un patin de coulisse (17) fixé à la tige support (13), disposé à distance au-dessus de l'axe d'inclinaison (N).

5. Appuie-tête selon la revendication 4, caractérisé en ce que deux joues, en particulier des joues latérales (21) du caisson de tête (15), présentent chacune une coulisse (18) dans laquelle s'engage chaque fois, à la façon d'un patin de coulisse (17), un élément de construction (19) du genre d'une barre, reliant entre elles deux tiges support (13), parallèles à l'axe d'inclinaison.

6. Appuie-tête selon la revendication 3, caractérisé en ce que, dans le cas d'un appuie-tête (10) réglable en hauteur du côté du dossier de siège, dans la zone supérieure chaque fois d'une douille de guidage (20), située côté dossier de siège, maintenant la tige support (13), un patin de glissement (16) est maintenu avec possibilité de pivotement autour d'un axe d'inclinaison (N) et traversé par la zone de réglage (K) située côté tige, et en ce qu'à la douille de siège (20) est associée une coulisse (18) lui étant fixée spatialement, ayant une courbure convexe orientée dans la direction de mise en appui (a), s'étendant à l'opposé de la zone de réglage (K) située côté tige support et en répondant à une symétrie spéculaire par rapport à celle-ci, coulisse dans laquelle s'engage un patin de coulisse (17) fixé sur la tige support (13), se trouvant à distance au-dessous de l'axe d'inclinaison (N).

7. Appuie-tête selon la revendication 6, caractérisé en ce que le patin de coulisse (17) est constitué par une saillie fixée en partie basse sur la zone de réglage (K) située côté tige support, s'écartant transversalement de la tige support (13).

8. Appuie-tête selon la revendication 6, caractérisé en ce qu'un composant du genre d'une barre, reliant ensemble deux tiges support (13), disposé à peu près parallèlement à l'axe d'inclinaison (N), constitue le patin de coulisse (17) s'engageant chaque fois dans une coulisse (18).
